# EUROPEAN PATENT APPLICATION

(11) **EP 3 772 302 A1**
(43) Date of publication of application: **10.02.2021**
(21) Application number: 19191089.2
(22) Date of filing: 09.08.2019
(51) Int. Cl.: A47J 37/06

(54) **COOKING APPLIANCE**

(71) Applicant: Vestel Elektronik Sanayi ve Ticaret A.S., 45030 Manisa (TR)
(72) Inventor: AKGÜL, Burak, 45030 Manisa (TR)
(74) Representative: Flint, Adam

(57) **Abstract**

A cooking appliance (10) has a first plate (12) and a second plate (14). The first and second plates (12, 14) can be moved apart from each other to allow a food item (50) to be located between the plates (12, 14) and removed from between the plates (12, 14). The first and second plates (12, 14) can be moved towards each other to engage a food item (50) located in use between the plates. At least one of the plates (12,14) supplies heat to the food item (50) in use. A drive arrangement (18, 24) drives the first and second plates (12, 14) apart from each other during heating of a food item (50) located in use between the plates (12, 14). This reduces the pressure on the food item (50) and thereby helps to prevent the food item (50) spilling out.

## Description

### Technical Field

The present disclosure relates to a cooking appliance.

### Background

Many different types of cooking appliance are known for heating and/or cooking food items. In some, heat and pressure are applied to the food item. A particular example is a sandwich grill (also known variously as a sandwich toaster, toasted sandwich maker, sandwich press or the like). A common problem with such cooking appliances is that the food item becomes overly compressed, which can spoil at least the appearance of the food item and can cause the food item to overspill the cooking appliance.

### Summary

According to an aspect disclosed herein, there is provided a cooking appliance, the cooking appliance comprising:
a first plate;
a second plate;
the cooking appliance being arranged so that the first and second plates can be moved apart from each other to allow a food item to be located between the plates and removed from between the plates, and arranged so that the first and second plates can be moved towards each other to engage a food item located in use between the plates;
at least one of the first and second plates being arranged so as to supply heat to a food item located in use between the plates; and
a drive arrangement arranged to drive the first and second plates apart from each other during heating of a food item located in use between the plates.

This reduces the pressure on the food item and thereby helps to prevent the food item spilling out.

In an example, the cooking appliance comprises a sensor arranged to detect the pressure being applied in use by at least one of the plates to a food item located in use between the plates, wherein the drive arrangement is arranged to drive movement of the first and second plates in accordance with the output of the sensor.

In an example, the drive arrangement is arranged to drive movement of the first and second plates such that the pressure being applied in use by at least one of the plates to a food item located in use between the plates initially rises to a maximum pressure, is maintained at the maximum pressure for a period of time, and is then reduced by the drive arrangement driving the first and second plates apart from each other.

In an example, the drive arrangement comprises a controller arranged to control the movement of the first and second plates.

In an example, the drive arrangement comprises an electric motor for driving movement of the first and second plates.

In an example, the cooking appliance comprises a temperature sensor for sensing the temperature of at least one of the first plate, the second plate and a food item located in use between the plates, whereby the heat being supplied by the at least one of the first and second plates to a food item located in use between the plates can be controlled to obtain a desired temperature.

### Brief Description of the Drawings

To assist understanding of the present disclosure and to show how embodiments may be put into effect, reference is made by way of example to the accompanying drawings in which:
Figure 1 shows schematically a perspective view of an example of a cooking appliance according to the present disclosure;
Figure 2 shows a schematic side view of the cooking appliance in an open condition;
Figure 3 shows a schematic side view of the cooking appliance in a closed condition and containing a food item; and
Figure 4 shows schematically a plot of an example of pressure applied to a food item over time during use of the cooking appliance.

### Detailed Description

As mentioned, different types of cooking appliance are known for heating and/or cooking food items. In some appliances, heat and pressure are applied to the food item. A particular example is a sandwich grill (also known variously as a sandwich toaster, toasted sandwich maker, sandwich press or the like). A common problem with such cooking appliances is that the food item becomes overly compressed. This can cause the food item to overspill the cooking appliance, especially as the food item continues to be heated. That is, during the heating or cooking process, the food item, or at least part of the food item, can be squeezed out. This can at least spoil the appearance of the food item and make a mess on the cooking appliance and/or surrounding surfaces.

In accordance with the present disclosure, a cooking appliance is provided having first and second plates. The food item is placed between the first and second plates and then heated. A drive arrangement drives the first and second plates apart from each other during heating of a food item located in use between the plates. This helps to prevent the food item becoming overly compressed and therefore overspilling the cooking appliance.

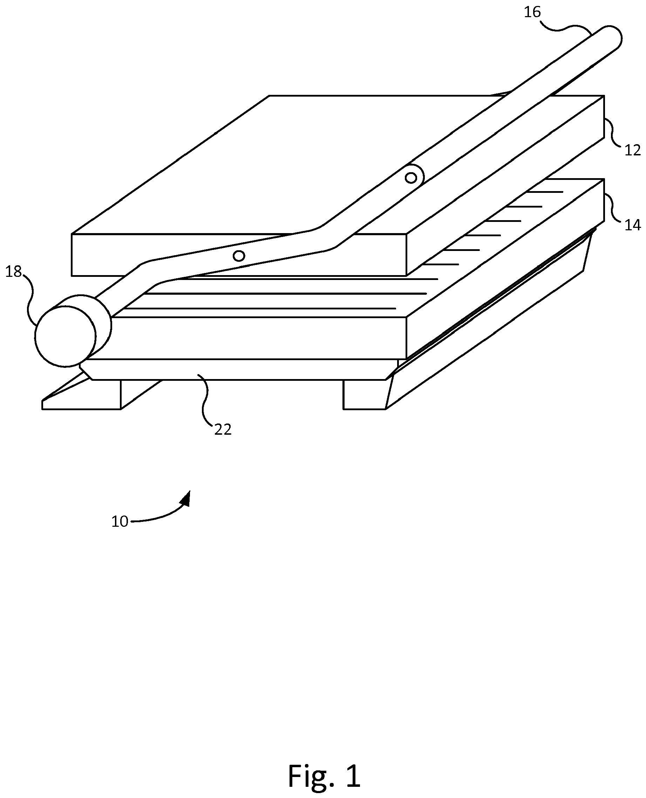

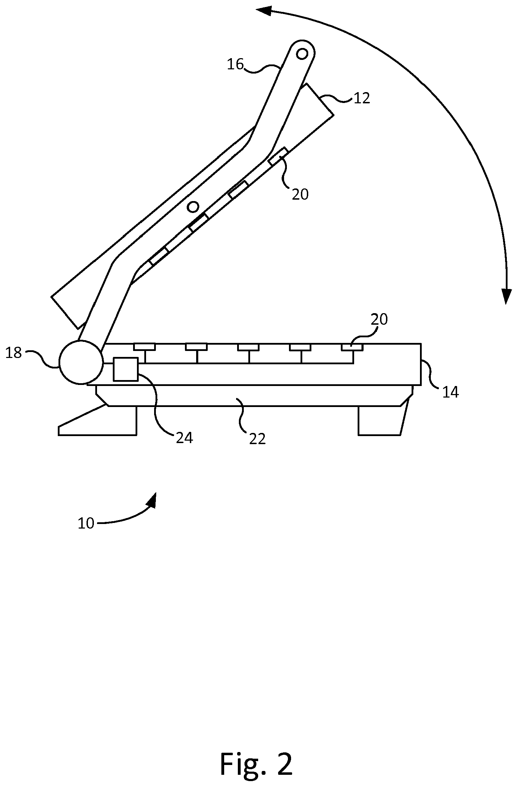

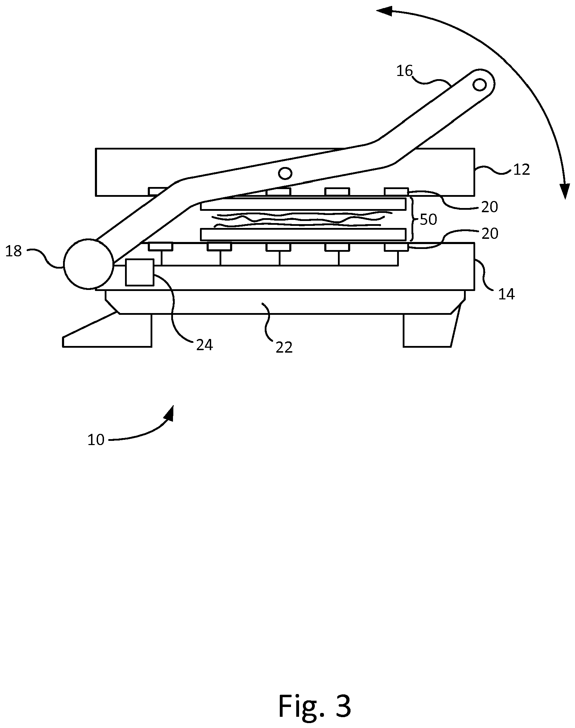

Referring now to the drawings, Figure 1 shows schematically a perspective view of an example of a cooking appliance 10 according to the present disclosure. Figure 2 shows a schematic side view of the cooking appliance 10 in an open condition and Figure 3 shows a schematic side view of the cooking appliance 10 in a closed condition and containing a food item 50. The cooking appliance 10 of this example is a sandwich grill (also known variously as a sandwich toaster, toasted sandwich maker, sandwich press or the like).

The cooking appliance 10 has a first plate 12 and a second plate 14. In conventional use, the cooking appliance 10 is arranged generally horizontally so that the first plate 12 is an upper plate and the second plate 14 is a lower plate. The cooking appliance 10 has a connection arrangement for the first and second plates 12 so that the first and second plates 12, 14 can be moved apart from each other and moved towards each other. Numerous different connection arrangements are possible and are known. For example, the first and second plates 12, 14 can be directly connected to each other via a hinge. As another example as shown, the cooking appliance 10 has a handle 16 which is pivotally connected at one end to the second plate 14. The first plate 12 is connected to the body of the handle 16 so that, as the handle 16 is pivoted up and down, the first plate 12 pivots up and down relative to the second plate 14. One or both of the first and second plates 12, 14 are or include electrically resistive heaters which when energised heat up so as to apply heat to the food item 50 in use.

In known sandwich grills, the corresponding upper and lower plates are typically simply manually opened and closed by a user when a food item is to be located between and removed from between the first and second plates. When the food item is being heated, the upper plate usually simply sits on top of the food item and presses down on the food item due to gravity. Sometimes such sandwich grills have a clip or latch to lock the upper and lower plates together. This keeps the upper and lower plates closed to apply pressure to the food item.

In contrast, in the example of the present disclosure, the cooking appliance 10 has a drive arrangement which is arranged to drive the first and second plates 12, 14 apart from each other during heating of the food item 50 located in use between the first and second plates 12, 14. This driving apart of the first and second plates 12, 14 helps to prevent the food item 50 becoming overly compressed during heating. This therefore helps to prevent the food item 50, or parts of the food item 50, being squeezed out by the pressure applied by the first and second plates 12, 14 (or, at least, by the weight of the first plate 12 pressing down on the food item 50).

In the example shown, the drive arrangement includes an electric motor 18. Numerous different arrangements for the electric motor 18 are possible, and the most appropriate or convenient will depend at least in part on the specific connection arrangement for the first and second plates 12, 14.

For example, the electric motor 18 may be contained within the body of the cooking appliance 10, such as within a housing 22 which supports the second, lower plate 14, and may be connected to the first, upper plate 12 by gears and/or levers, etc. As another example as shown, the electric motor 18 is fixed against rotation relative to the second, lower plate 14 and has its drive shaft connected to the handle 16.

In any case, when the motor 18 is energised, the motor 18 drives the first and second plates 12, 14 apart. The motor 18 in this example can also be operated in the opposite direction to bring the first and second plates 12, 14 together when desired.

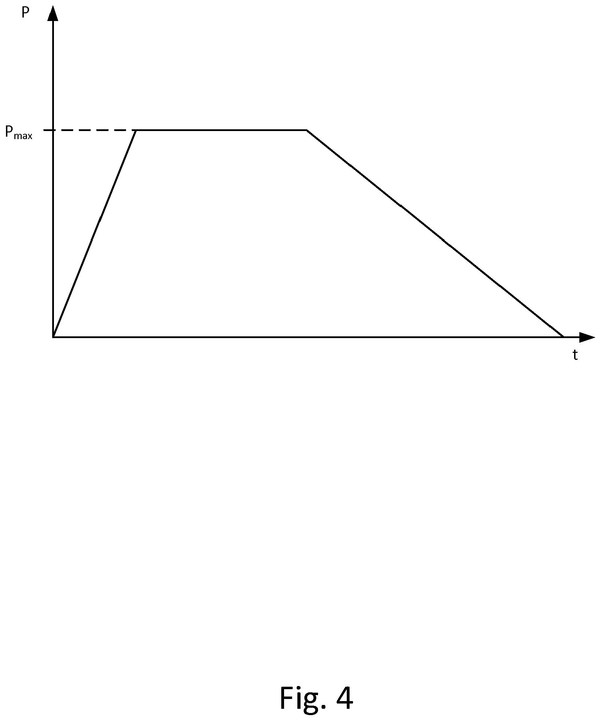

Referring now to Figure 4, in use in an example, the drive arrangement, including here the motor 18, is operated so as to bring the first and second plates 12, 14 together to initially apply an increasing pressure (or equivalently increasing force) to the food item 50 until a maximum pressure P_{MAX} (or equivalently maximum force) is reached. The movement can be relatively fast so that the first and second plates 12, 14 engage and apply pressure to the food item 50 quickly. Then, at least as an option, the maximum pressure P_{MAX} is maintained for a period of time by holding the first and second plates 12, 14 statically in position. After that continuous maximum pressure P_{MAX} has been maintained, or, alternatively, as soon as the maximum pressure P_{MAX} was reached, the drive arrangement, including here the motor 18, is operated so as to move the first and second plates 12, 14 apart and thereby reduce the pressure that is applied to the food item 50. This movement apart can be relatively slow so that the pressure is only reduced relatively slowly. This helps to maintain a good contact between the food item 50 and the first and second plates 12, 14, such that heating and/or cooking of the food item 50 continues at this time. In an example, the first and/or second plates 12, 14 continue to be energised throughout this period of time so as to continue applying heat to the food item 50 as the first and second plates 12, 14 are moved apart.

Therefore, the pressure on the food item 50 is relieved, particularly towards the end of the heating/cooking process. This helps to prevent the food item 50, or parts of the food item 50, being squeezed out.

This operation of the drive arrangement may be controlled through the use of a timer. For example, the drive arrangement may be arranged to increase the pressure steadily over a first period of time. The drive arrangement may then maintain the maximum pressure for a second period of time, and then reduce the pressure being applied by opening the first and second plates 12, 14 steadily over a third period of time. The first, second and third periods of time may be fixed, such that they are the same for all food items 50. As an alternative, the cooking appliance may provide for a user input which enables the user to adjust one or more of the first, second and third periods of time, for example taking into account of the nature of the food item 50.

As another example, there may be a feedback system for controlling operation of the drive arrangement. For example as shown, the cooking appliance 10 may have one or more pressure sensors 20 which detect the pressure being applied to the food item 50 by the action of the first and second plates 12, 14. There may be at least one pressure sensor 20 in the face of at least one of the first and second plates 12, 14. In an example, there is at least one pressure sensor 20 in the face of at least the first, upper plate 12. In the example shown, there are plural pressure sensors 20 arranged at different locations over the faces of the first and second plates 12, 14. This can help provide for a more accurate and averaged measure of the pressure being applied to the food item 50. The or each pressure sensor 20 may be a resistive sensor, such as for example a piezoelectric resistive sensor, though other types of pressure sensor may be used.

In this example, the cooking appliance 10 has a controller 24. The controller may be a processor, a microcontroller, etc. The controller receives outputs from the one or more pressure sensors 20 and controls operation of the motor 18 accordingly. For example, using feedback from the one or more pressure sensors 20, the controller 24 can in principle control operation of the motor 18 to move the first and second plates 12, 14 together and apart freely so as to maintain a desired pressure at any point in time. The pressure may follow a profile or curve like that shown in Figure 4 or any other desired pattern. There may be a number of different pressure profiles that are appropriate for different types of food items 50 and which are stored by the cooking appliance 10. The cooking appliance 10 in such a case may have an input which enables a user to select a particular type of food item, and the controller 24 selects the corresponding pressure profile to be applied over time and controls the motor 20 to move the first and second plates 12, 14 correspondingly.

Further, the controller 24 may be used to practically automate the whole operation. For example, a user may press an "open" button or the like, which causes the controller 24 to operate the motor 20 to drive the first and second plates 12, 14 apart. The user can then load a food item onto the second, lower plate 14 and then press a "start" button or the like. This causes the controller 24 to operate the motor 20 to drive the first and second plates 12, 14 towards each other. When the first plate 12 engages the food item 50, the increasing pressure on the food item 50 is detected and the movement controlled so as to obtain the desired or selected pressure profile as discussed above. Once the first and second plates 12, 14 have been moved apart to remove the pressure on the food item 50, the controller 24 can cause the first and second plates 12, 14 to be completely opened to allow the user to remove the food item 50. In an example, the controller 24 also causes the first and second plates 12, 14 to be energised to heat the food item 50 at the desired times. This heating may be for the whole time that the first and second plates 12, 14 engage the food item 50 as discussed above. As an alternative, the heating may be switched off when the first and second plates 12, 14 are being moved apart again (i.e. during the "third" period of time in the example above).

As a further variation, the cooking appliance 10 may have one or more temperature sensors which monitor the temperature of the one or both first and second plates 12, 14 being energised to heat the food item 50 and/or of the food item 50 itself. The output of the one or more temperature sensors may be passed to the controller 24. The controller 24 can then control the amount of electrical power provided to the one or both first and second plates 12, 14 being energised so as to maintain a desired temperature being applied to the food item 50. Alternatively or additionally, the controller 24 can take into account the temperature when moving the first and second plates 12, 14 together and apart such that an appropriate combination of pressure and temperature is applied to the food item 50. That temperature may be set by user input and/or in accordance with one of a number of temperature and pressure profiles for different types of food items 50 which are stored by the cooking appliance 10 and which is selected by a user when required.

Examples described herein provide a cooking appliance, such as a sandwich grill, that is less prone to causing food to be squeezed out during heating or cooking of the food item. Some examples enable the use of the cooking appliance to be practically automated, requiring a user basically only to initiate the heating process.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A cooking appliance, the cooking appliance comprising:
a first plate;
a second plate;
the cooking appliance being arranged so that the first and second plates can be moved apart from each other to allow a food item to be located between the plates and removed from between the plates, and arranged so that the first and second plates can be moved towards each other to engage a food item located in use between the plates;
at least one of the first and second plates being arranged so as to supply heat to a food item located in use between the plates; and
a drive arrangement arranged to drive the first and second plates apart from each other during heating of a food item located in use between the plates.

2. A cooking appliance according to claim 1, comprising a sensor arranged to detect the pressure being applied in use by at least one of the plates to a food item located in use between the plates, wherein the drive arrangement is arranged to drive movement of the first and second plates in accordance with the output of the sensor.

3. A cooking appliance according to claim 2, wherein the drive arrangement is arranged to drive movement of the first and second plates such that the pressure being applied in use by at least one of the plates to a food item located in use between the plates initially rises to a maximum pressure, is maintained at the maximum pressure for a period of time, and is then reduced by the drive arrangement driving the first and second plates apart from each other.

4. A cooking appliance according to any of claims 1 to 3, wherein the drive arrangement comprises a controller arranged to control the movement of the first and second plates.

5. A cooking appliance according to any of claims 1 to 4, wherein the drive arrangement comprises an electric motor for driving movement of the first and second plates.

6. A cooking appliance according to any of claims 1 to 5, comprising a temperature sensor for sensing the temperature of at least one of the first plate, the second plate and a food item located in use between the plates, whereby the heat being supplied by the at least one of the first and second plates to a food item located in use between the plates can be controlled to obtain a desired temperature.
